(19) **Europäisches Patentamt**
**European Patent Office**
**Office européen des brevets**

(11) **EP 4 273 510 A1**

(12) **EUROPEAN PATENT APPLICATION**
published in accordance with Art. 153(4) EPC

(43) Date of publication:
**08.11.2023 Bulletin 2023/45**

(21) Application number: **21914328.6**

(22) Date of filing: **28.12.2021**

(51) International Patent Classification (IPC):
***G01F 1/00*** *(2022.01)*     ***G01F 23/00*** *(2022.01)*

(52) Cooperative Patent Classification (CPC):
**G01F 1/00; G01F 23/00**

(86) International application number:
**PCT/CN2021/141858**

(87) International publication number:
**WO 2022/143592 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020 CN 202011641491**

(71) Applicant: **G & F Pump PTE. LTD.
Singapore 150165 (SG)**

(72) Inventor: **GUAN, Tianri
Shandong 257000 (CN)**

(74) Representative: **Plasseraud IP
66, rue de la Chaussée d'Antin
75440 Paris Cedex 09 (FR)**

(54) **MEASUREMENT METHOD AND DEVICE FOR MULTIPHASE FLOW MIXED TRANSPORTATION**

(57) The present application provides a measurement method and device for multiphase flow mixed transportation. The measurement method for multiphase flow mixed transportation comprises: acquiring flow directions of liquids in a first tank and a second tank in a single circulation; controlling, according to the flow directions, a reversing mechanism to work so as to enable the liquids in the first tank and the second tank to flow; acquiring a liquid dropping space of a tank in a vacuum suction chamber, acquiring the volume of a liquid delivered by the reversing mechanism, and according to the liquid dropping space and the liquid volume, calculating the volume of liquid suctioned in by the tank in the vacuum suction chamber within the single circulation. In the present application, according to the volume of liquid delivered by the reversing mechanism being equal to the sum of a liquid dropping space and the volume of liquid suctioned into a multiphase mixture, the volume of liquid in a single circulation process is calculated, thereby achieving liquid volume measurement in a multiphase flow mixed transportation process, omitting oil and gas separation equipment, and omitting crude oil product delivery and reducing measurement costs.

Fig. 1

## Description

The present application claims the priority of a Chinese patent application filed with China National Intellectual Property Administration on December 31, 2020, with the application number 202011641491.X and the title "Measurement Method and Device for Transporting Multiphase Flow Mixture", which is incorporated in its entirety into the present application by reference.

## Technical Field

The present application relates to the technical field of transportation of multiphase flow mixtures, and in particular to a measurement method and a device for multiphase flow mixed transportation.

## Background Art

At present, the main product of oil and gas in oil fields is a multiphase flow containing oil, natural gas, water, sediment mixed in the liquid, etc. The multiphase flow produced needs to be transported through pipelines over long distances. However, it is impossible to measure the volume of the liquid during the transportation of a multiphase flow mixture because of relatively large fluctuations in the flow rates of the liquid and the gas due to slug flow, a phenomenon with the liquid and the gas in a pipeline transporting a multiphase flow where one pipeline section of liquid is followed by another section of gas. In the prior art, to measure a multiphase flow mixture during transportation, the multiphase flow needs to be transported to a gas-liquid separator for separation, and then a gas flowmeter and a fluid flowmeter are used to measure the flow rate of the gas and that of the liquid respectively. The additional equipment for separating the oil and the gas increases the costs for the transportation and measurement of the crude oil product.

## Summary of the Invention

## Technical Problem

The present application provides a measurement method and a device for multiphase flow mixed transportation, aiming to solve the technical problem in the prior art that multiphase flow mixtures cannot be measured during the transportation process.

## Technical Solution

In a first aspect, the present application provides a measurement method for multiphase flow mixed transportation, comprising:

> providing a device for multiphase flow mixed transportation, the device for multiphase flow mixed transportation having a first tank, a second tank and a reversing mechanism that drives a liquid in the first tank and the second tank to circulate it;
obtaining the flow direction of the liquid between the first tank and the second tank in one cycle;
controlling the reversing mechanism to run according to the flow direction, so that the liquid level in either the first tank or the second tank drops to form a vacuum suction cavity, and that the liquid level in the other tank rises to form a compression discharging cavity; the tank with the vacuum suction cavity sucks the liquid and/or gas, and the tank with the compression discharging cavity discharges the liquid and/or gas;
obtaining the volume change of the tank with the vacuum suction cavity as a result of liquid level lowering, obtaining the volume of the liquid transported by the reversing mechanism, and calculating the volume of the liquid sucked by the tank with the vacuum suction cavity in the single cycle based on the volume change as a result of liquid level lowering and the volume of the liquid transported by the reversing mechanism.

In some embodiments, the method further comprises:

> calculating the cumulative volume of liquid transported by summing the volumes of liquid sucked in all the single cycles that have been executed; or
> obtaining the volume of liquid transported, and calculating the cumulative volume of liquid transported by summing the volume of liquid transported and the volume of liquid sucked in the single cycle.

In some embodiments, the method further comprises:

> obtaining a first pressure after liquid level lowering in the tank with the vacuum suction cavity and the standard pressure;
> calculating the volume of gas sucked by the tank with the vacuum suction cavity in the single cycle by the ideal gas equation of state based on the volume change as a result of liquid level lowering, the first pressure and the standard pressure.

In some embodiments, the method further comprises:

> calculating the cumulative volume of gas transported by summing the volumes of gas sucked in all the single cycles that have been executed; or
> obtaining the volume of gas transported, and calculating the cumulative volume of gas transported by summing the volume of gas transported and the volume of gas sucked in the single cycle.

In some embodiments, the step of obtaining the volume of liquid transported by the reversing mechanism comprises:

obtaining the flow rate in the pipeline connecting the first tank and the second tank, and obtaining the time during which the reversing mechanism transports liquid;
calculating the volume of liquid transported by the reversing mechanism in one cycle by the flow rate formula based on the flow rate and the time.

In some embodiments, the step of obtaining a flow direction of the liquid between the first tank and the second tank in a single cycle comprises:

detecting whether the liquid levels in the first tank and the second tank reach a preset liquid level line;
deciding that the flow direction is the direction along which liquid flows from the second tank to the first tank if the liquid level in the first tank reaches the preset liquid level line; deciding that the flow direction is the direction along which liquid flows from the first tank to the second tank if the liquid level in the second tank reaches the preset liquid level line.

In some embodiments, the step of obtaining the volume change of the tank with the vacuum suction cavity as a result of liquid level lowering comprises:

obtaining a first liquid level in the tank with the vacuum suction cavity before a liquid level change and a second liquid level after the liquid level change;
calculating the volume change as a result of liquid level lowering based on the first liquid level and the second liquid level.

In some embodiments, the step of controlling the reversing mechanism to run according to the flow direction so that the liquid level in either the first tank or the second tank drops to form a vacuum suction cavity and that the liquid level in the other tank rises to form a compression discharging cavity comprises:

connecting a connecting pipeline in the reversing mechanism, the connecting pipeline connecting the first tank and the second tank;
controlling a mechanical pump of the reversing mechanism to run, so that liquid in the first tank and the second tank flows in the flow direction through the connecting pipeline.

In some embodiments, the step of connecting a connecting pipeline in the reversing mechanism comprises:

connecting a forward flow pipeline group in the connecting pipeline, and disconnecting a reverse flow pipeline group in the connecting pipeline; or

connecting a reverse flow pipeline group in the connecting pipeline, and disconnecting a forward flow pipeline group in the connecting pipeline.

In some embodiments, the step of connecting a forward flow pipeline group in the connecting pipeline and disconnecting a reverse flow pipeline group in the connecting pipeline comprises:

opening a first valve and a second valve on the forward flow pipeline group, the first valve being provided at the connection between the forward flow pipeline group and the first tank, and the second valve being provided at the connection between the forward flow pipeline group and the second tank;
closing a third valve and a fourth valve on the reverse flow pipeline group, the third valve being provided at the connection between the reverse flow pipeline group and the first tank, and the fourth valve being provided at the connection between the reverse flow pipeline group and the second tank.

In some embodiments, the step of connecting a connecting pipeline in the reversing mechanism comprises:

controlling a three-position four-way valve on the connecting pipeline to be in a first valve position, connecting the P port and the A port of the three-position four-way valve, and connecting the T port and the B port of the three-position four-way valve; or controlling a three-position four-way valve on the connecting pipeline to be in a second valve position, connecting the P port and the B port of the three-position four-way valve, and connecting the T port and the A port of the three-position four-way valve.

In a second aspect, the present application provides a device for multiphase flow mixed transportation, which uses the measurement method for multiphase flow mixed transportation described in the first aspect.
In some embodiments, the device for multiphase flow mixed transportation comprises:

a first tank;
a second tank;
a reversing mechanism, connected to the first tank and the second tank, and used to drive the liquid in the first tank and the second tank to circulate, so that the first tank and the second tank alternately form a vacuum suction cavity and/or a compression discharging cavity, for continuous transportation of liquid, gas or a gas-liquid mixture;
a measuring mechanism, comprising a first liquid level meter, a second liquid level meter and a flowmeter, the first liquid level meter being provided at the first tank, the second liquid level meter being provided at the second tank, and the flowmeter being provided at the reversing mechanism and used to measure the flow rate of the liquid driven by the reversing mechanism to circulate between the first tank and the second tank.

In some embodiments, a material inlet and a material outlet are provided in the upper part of the first tank and the second tank, so that the fluid of a multiphase flow mixture is sucked in from the material inlet and discharged from the material outlet.

In some embodiments, the reversing mechanism comprises a mechanical pump and a connecting pipeline.

In some embodiments, the mechanical pump is a single pumping device, the connecting pipeline is a single pipeline, the single pipeline is connected to the first tank and the second tank, and the single pumping device is provided on the single pipeline.

In some embodiments, the mechanical pump has two pumping devices, and the connecting pipeline comprises a forward flow pipeline group and a reverse flow pipeline group, the forward flow pipeline group and the reverse flow pipeline group are independently connected to both the first tank and the second tank, the two pumping devices are respectively provided on the forward flow pipeline group and the reverse flow pipeline group, one of the pumping devices pumps liquid in the first tank to the second tank, and the other of the pumping device pumps liquid in the second tank to first tank.

In some embodiments, the connecting pipeline comprises a first sub-pipeline, a second sub-pipeline and a third sub-pipeline, the first sub-pipeline and the second sub-pipeline are independently connected to both the first tank and the second tank, valves are provided at the four connections between the first sub-pipeline and the second sub-pipeline on the one hand and the first tank and the second tank on the other hand, one end of the third sub-pipeline is connected to the first sub-pipeline, the other end is connected to the second sub-pipeline, and the mechanical pump is provided on the third sub-pipeline.

In some embodiments, the reversing mechanism comprises a three-position four-way valve, and the mechanical pump and the connecting pipeline are connected through the three-position four-way valve.

In some embodiments, the device for multiphase flow mixed transportation further comprises an input mechanism, wherein the input mechanism comprises a first pipeline and a first control valve, the first pipeline is connected to the first tank and the second tank, and the first control valve is used to control the connection or disconnection between the first pipeline on the one hand and the first tank and the second tank on the other hand.

In some embodiments, the device for multiphase flow mixed transportation further comprises an output mechanism, wherein the output mechanism comprises a second pipeline and a second control valve, the second pipeline is connected to the first tank and the second tank, and the second control valve is used to control the connection or disconnection between the second pipeline on the one hand and the first tank and the second tank on the other hand.

**Beneficial Effects**

In the present application, the reversing mechanism is controlled in a single cycle, so that the liquid level in either the first tank or the second tank lowers to form a vacuum suction cavity, while that in the other tank rises to form a compression discharging cavity, wherein the tank with the vacuum suction cavity sucks in the multiphase mixture, and the volume of the liquid in a single cycle is calculated by use of the fact that the volume of liquid transported by the reversing mechanism is equal to the sum of the volume change as a result of liquid level lowering and the volume of the liquid in the multiphase mixture sucked, thereby measuring the liquid volume during the transportation of the multiphase flow mixture, eliminating the equipment for separating oil and gas, and lowering the costs for the transportation and measurement of the crude oil product.

**Brief Description of the Drawings**

In order to more clearly describe the technical solutions in the embodiments of the present application, the drawings that need to be used in the description of the embodiments will be described briefly below. The drawings described below represent only some embodiments of the present application, and those skilled in the art may obtain other drawings according to these without creative work.

Figure 1 is a schematic flowchart of the measurement method for multiphase flow mixed transportation provided in the embodiments of the present application;

Figure 2 is a schematic structural diagram of the device for multiphase flow mixed transportation provided in the embodiments of the present application;

Figure 3 is another schematic diagram of the reversing mechanism provided in the embodiments of the present application;

Figure 4 is another schematic diagram of the reversing mechanism provided in the embodiments of the present application;

Figure 5 is another schematic diagram of the reversing mechanism provided in the embodiments of the present application.

In the drawings, 10 first tank, 20 second tank, 30 reversing mechanism;

31 connecting pipeline, 311 first sub-pipeline, 312 second sub-pipeline, 313 third sub-pipeline, 314 forward flow pipeline group, 315 reverse flow pipeline group, 316 first valve, 317 second valve, 318 third valve, 319 fourth valve, 32 mechanical pump;
40 measuring mechanism, 41 first liquid level meter, 42 second liquid level meter, 43 flowmeter;
50 input mechanism, 51 first pipeline, 52 first control valve;
60 output mechanism, 61 second pipeline, 62 second control valve;

## Embodiments of the Invention

The technical solutions in the embodiments of the present application will be clearly and completely described below in conjunction with the drawings of the embodiments of the present application. Obviously, the described embodiments are only some embodiments of the present application, rather than all embodiments. Based on the embodiments of the present application, all other embodiments obtained by those skilled in the art without creative work fall within the scope of the present application.

In the description of the present application, it is to be understood that terms indicating orientations or positional relationships, such as "center", "longitudinal", "transverse", "length", "width", "thickness", "upper", "lower", "front", "rear", "left", "right", "vertical", "horizontal", "top", "bottom", "inner", "outer", etc., are based on the orientations or positional relationships shown in the drawings, intended only for the convenience of describing the present application and simplifying the description, rather than indicating or implying that the device or element referred to must have a specific orientation or be constructed and operated in a specific orientation, and therefore cannot be construed as limiting the present application. In addition, the terms "first" and "second" are used only for descriptive purposes, and should not be understood as indicating or implying relative importance or implicitly indicating the number of technical features indicated. Thus, a feature defined by "first" or "second" may expressly or implicitly include one or more of said feature. In the description of the present application, "a plurality" denotes two or more than two, unless otherwise clearly defined.

In the present application, the term "exemplary" is used to mean "serving as an example, illustration or description". Any embodiment described herein as "exemplary" is not necessarily to be construed as preferred or advantageous over other embodiments. The following description is given so that anyone skilled in the art can implement and use the present application. In the description below, details are set out for the purpose of explanation. It should be understood that those ordinarily skilled in the art could realize that the present application may be implemented without the use of these specific details. In other instances, well-known structures and processes will not be described in detail to avoid obscuring the description of the present application with unnecessary details. Therefore, the present application is not intended to be limited to the embodiments shown, but is to be consistent with the widest scope in line with the principle and features disclosed herein.

The embodiments of the present application provide a measurement method and a device for multiphase flow mixed transportation, which will be described below separately.

Firstly, the measurement method for a multiphase flow will be described. The measurement method for multiphase flow mixed transportation comprises a plurality of cyclic processes, wherein either the process where liquid in the first tank 10 is sent into the second tank 20 or the process where liquid in the second tank 20 is sent into the first tank 10 may be referred to as one cyclic process.

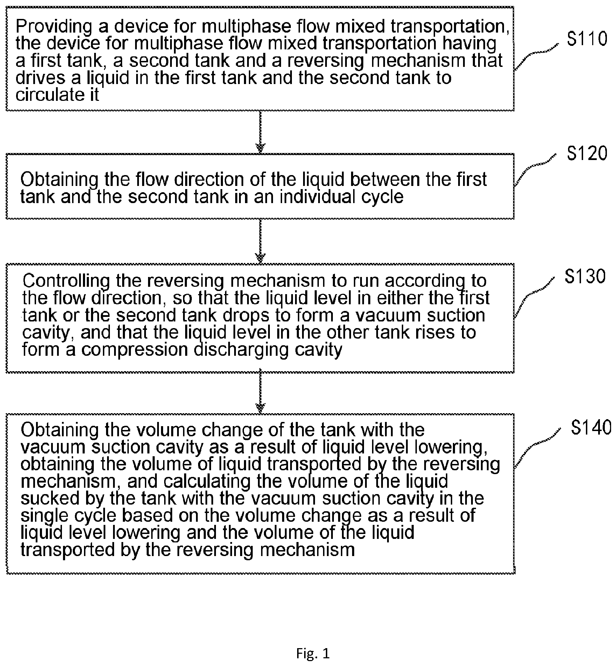

Referring to Figure 1, Figure 1 is a schematic flowchart of the measurement method for multiphase flow mixed transportation provided in the embodiments of the present application, wherein the method comprises:

Step S110, providing a device for multiphase flow mixed transportation, the device for multiphase flow mixed transportation having a first tank 10, a second tank 20 and a reversing mechanism 30 that drives liquid in the first tank 10 and the second tank 20 to circulate;

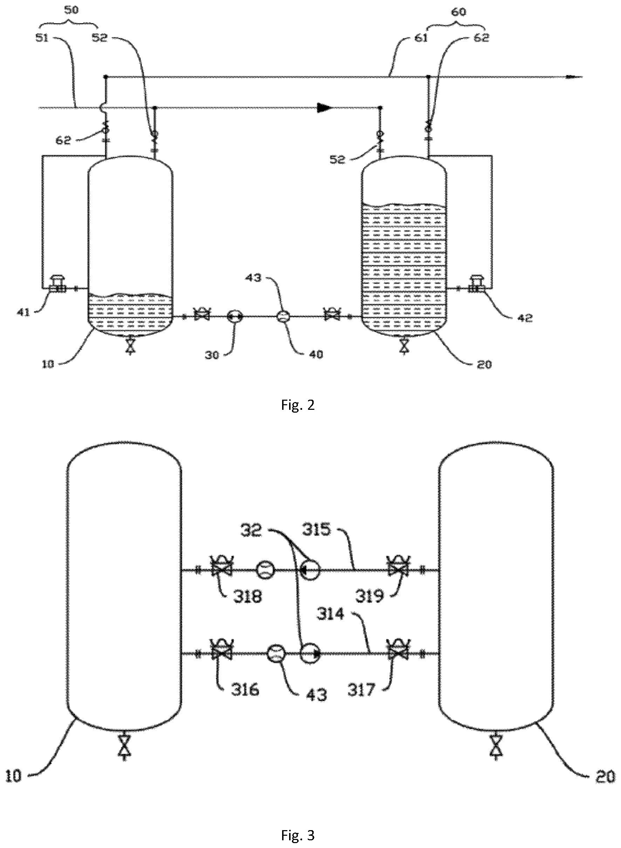

Before the measurement method for multiphase flow mixed transportation is executed, the device for multiphase flow mixed transportation is provided, wherein the device for multiphase flow mixed transportation has a first tank 10, a second tank 20 and a reversing mechanism 30 that drives a liquid in the first tank 10 and the second tank 20 to circulate it. The description in other embodiments of the present application, for example, the part in the description corresponding to Figures 2 to 5, may be referred to for the description of the device for multiphase flow mixed transportation, which will not be detailed here.

It is worth noting that, before the start of each cyclic process or in the previous cyclic process, the liquid level of the first tank 10 and that of the second tank 20 may be continuously collected, to help to decide whether the liquid levels of the first tank 10 and the second tank 20 meet the condition for initiating the next cyclic process and thus to start measuring the liquid volume in the next cyclic process; specifically, liquid level meters provided at the first tank 10 and the second tank 20 may be used to continuously measure and obtain the liquid level of the first tank 10 and that of the second tank 20.

Generally, the preset liquid level line is the set minimum liquid level, so as to prevent the liquid level from being too low for the liquid to circulate between the first tank 10 and the second tank 20. Exemplarily, the preset liquid level line may be set at the inlets where the connecting pipeline 31 in the reversing mechanism 30 is connected to the first tank 10 and the second tank 20, so as to prevent the liquid level from dropping too low for the mechanical pump 32 in the reversing mechanism 30 to pump the liquid. Understandably, the preset liquid level line may also be set at other positions higher than the inlets where the connecting pipeline 31 is connected to the first tank 10 and the second tank 20.

Step S120, obtaining the flow direction of the liquid between the first tank 10 and the second tank 20 in a single cycle;

A single cycle refers to any one cyclic process in the plurality of cyclic processes. For example, either the process where liquid in the first tank 10 is sent into the second tank 20 or the process where liquid in the second tank 20 is sent into the first tank 10 may be referred to as a single cycle. Specifically, the flow direction of the liquid between the first tank and the second tank in one cycle may be obtained by detecting whether the liquid level of the first tank 10 or that of the second tank 20 reaches the preset liquid level line.

For example, when the liquid level in the first tank 10 reaches the preset liquid level line, the obtained flow direction is the direction along which liquid in the second tank 20 flows into the first tank 10, so that the second tank 20 can transport liquid to the first tank 10 where the liquid level reaches the lowest point, negative pressure is produced in the second tank 20 to suck the multiphase mixture, and that high pressure is produced in the first tank 10 to compress and discharge the multiphase mixture; for another example, when the liquid level in the second tank 20 reaches the preset liquid level line, the obtained flow direction is the direction along which liquid in the first tank 10 flows into the second tank 20. Understandably, the flow direction of the liquid between the first tank 10 and the second tank 20 in a single cycle may also be obtained in other ways, for example, by taking the direction opposite to the flow direction in the previous cycle as the flow direction of the liquid in a single cycle.

Step S130, controlling the reversing mechanism 30 according to the flow direction to drive the liquid in the first tank 10 and the second tank 20 to flow, so that the liquid level in either the first tank 10 or the second tank 20 drops to form a vacuum suction cavity, and that the liquid level in the other tank rises to form a compression discharging cavity; the tank with the vacuum suction cavity sucks the liquid and/or gas, and the tank with the compression discharging cavity discharges the liquid and/or gas;

After the flow direction of the liquid in the first tank 10 and the second tank 20 is determined, the reversing mechanism 30 can be controlled to run according to the flow direction. During the process where the reversing mechanism 30 is driven to make the liquid in the first tank 10 and the second tank 20 flow, since either the first tank 10 or the second tank 20 outputs liquid while the other receives liquid, the liquid level in either the first tank 10 or the second tank 20 will drop to form a vacuum suction cavity, while the liquid level in the other tank will rise to form a compression discharging cavity, wherein the tank with the vacuum suction cavity sucks the multiphase mixture, specifically, as shown in Figure 2, by opening the first control valve 52 provided at the connection between the tank with the vacuum suction cavity and the first pipeline 51, to use the vacuum suction cavity to suck the multiphase mixture in the first pipeline 51; the tank with the compression discharging cavity discharges the multiphase mixture, by opening the second control valve 62 provided at the connection between the tank with the compression discharging cavity and the second pipeline 61, and the tank with the compression discharging cavity expels the gas in its upper part into the second pipeline 61 before discharging liquid into the second pipeline 61 when the tank is fully filled with liquid, thereby realizing the process of sucking and discharging the multiphase mixture. Understandably, due to the slug flow during the transportation of the multiphase flow mixture, the process where the tank with the vacuum suction cavity sucks liquid and/or gas may be continuous or intermittent.

Specifically, controlling the reversing mechanism 30 to drive the liquid in the first tank 10 and the second tank 20 to flow may comprise: connecting the connecting pipeline 31 in the reversing mechanism 30, the connecting pipeline 31 connecting the first tank 10 and the second tank 20; controlling the mechanical pump 32 of the reversing mechanism 30 to run, so that the liquid in the first tank 10 and the second tank 20 flows along the flow direction through the connecting pipeline 31.

In some embodiments of the present application, as shown in Figure 3, the connecting pipeline 31 may comprise a forward flow pipeline group 314 and a reverse flow pipeline group 315, wherein the two ends of the forward flow pipeline group 314 are respectively connected to the first tank 10 and the second tank 20, and the two ends of the reverse flow pipeline group 315 are respectively connected to the first tank 10 and the second tank 20. Connecting the connecting pipeline 31 in the reversing mechanism 30 may comprise: connecting the forward flow pipeline group 314 in the connecting pipeline 31, and disconnecting the reverse flow pipeline group 315 in the connecting pipeline 31; or connecting the reverse flow pipeline group 315 in the connecting pipeline 31, and disconnecting the forward flow pipeline group 314 in the connecting pipeline 31.

Specifically, the connection of the forward flow pipeline group 314 and the reverse flow pipeline group 315 may be controlled by controlling the opening and closing of valves. As shown in Figure 3, the first valve 316 and the second valve 317 are provided on the forward flow pipeline group 314, the first valve 316 is provided at the connection between the forward flow pipeline group 314 and the first tank 10, the second valve 317 is provided at the connection between the forward flow pipeline group 314 and the second tank 20, and the third valve 318 and the fourth valve 319 are provided on the reverse flow pipeline group 315. Therefore, the forward flow pipeline group 314 can be connected and the reverse flow pipeline group 315 can be disconnected by opening the first valve 316 and the second valve 317 on the forward flow pipeline group 314 and closing the third valve 318 and the fourth valve 319 on the reverse flow pipeline group 315. When the forward flow pipeline group 314 is connected, the mechanical pump 32 on the forward flow pipeline group 314 can be controlled to start, for the purpose of transporting liquid from the first tank 10 to the second tank 20; when the reverse flow pipeline group 315 is connected, the mechanical pump 32 on the reverse flow pipeline group 315 can be controlled to start, for the purpose of transporting liquid from the second tank 20 to the first tank 10.

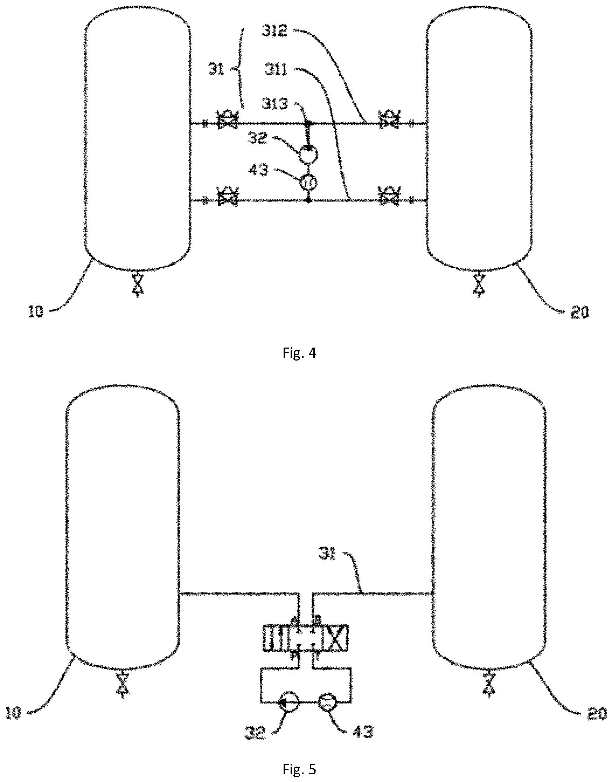

As another example, as shown in Figure 5, the connecting pipeline 31 may be a single pipeline, and the mechanical pump 32 and the connecting pipeline 31 are connected through a three-position four-way valve, wherein the two ends of the connecting pipeline 31 are respectively connected to the first tank 10 and the second tank 20, a connecting port is provided in the middle portion to connect to the A port and the B port of the three-position four-way valve respectively, and the inlet and outlet of the mechanical pump 32 are respectively connected to the P port and the T port of the three-position four-way valve. When the three-position four-way valve on the connecting pipeline 31 is in the first valve position (for example, the right position as shown in Figure 5), the A port and the T port of the three-position four-way valve are connected, the P port and the B port of the three-position four-way valve are connected, and at this point, the mechanical pump 32 extracts the liquid in a first intermediate tank and sends it into a second intermediate tank through the A port, the T port, the P port and the B port. On the other hand, when the three-position four-way valve on the connecting pipeline 31 is in the second valve position (for example, the left position as shown in Figure 5), the P port and the A port of the three-position four-way valve are connected, the T port and the B port of the three-position four-way valve are connected, and the mechanical pump 32 extracts the liquid in the second intermediate tank and sends it to the first intermediate tank through the B port, the T port, the P port and the A port. In the above process, the position of the core in the three-position four-way valve is controlled to control the connection of the P port, the T port, the A port and the B port, and thus the flow direction of the liquid between the first tank 10 and the second tank 20 is controlled without the need of switching the forward and reverse rotation directions of the mechanical pump 32, while the number of valves is reduced. Understandably, the three-position four-way valve further has a third valve position, for example, a position where the A port, the T port, the P port and the B port are all closed.

Understandably, some other embodiments of the reversing mechanism 30 of the present application may be referred to for the control of the connection of the connecting pipeline 31, for example, Figures 3 to 5 and the corresponding description, which will not be detailed here.

Step S140, obtaining the volume change of the tank with the vacuum suction cavity as a result of liquid level lowering, obtaining the volume of liquid transported by the reversing mechanism 30, and calculating the volume of the liquid sucked by the tank with the vacuum suction cavity in the single cycle based on the volume change as a result of liquid level lowering and the volume of the liquid transported.

In the process of driving the reversing mechanism 30 to make the liquid in the first tank 10 and the second tank 20 to flow, as the liquid level in either the first tank 10 or the second tank 20 drops while that in the other tank rises, the volume change of the tank with the vacuum suction cavity as a result of liquid level lowering can be obtained, as well as the volume of the liquid transported by the reversing mechanism 30. Because the sum of the volume of liquid sucked by the tank with the vacuum suction cavity and the volume change as a result of liquid level lowering is equal to the volume of the liquid transported by the mechanism 30, the difference between the volume change as a result of liquid level lowering and the volume of the liquid transported can be used as the volume of the liquid in the single cycle.

In the present application, the reversing mechanism 30 is controlled in each single cycle, so that the liquid level in either the first tank 10 or the second tank 20 lowers to form a vacuum suction cavity, while that in the other tank rises to form a compression discharging cavity, wherein the tank with the vacuum suction cavity sucks in the multiphase mixture, and the volume of the liquid in each single cycle is calculated by use of the fact that the volume of liquid transported by the reversing mechanism 30 is equal to the sum of the volume change as a result of liquid level lowering and the volume of the liquid in the multiphase mixture sucked, thereby measuring the liquid volume and the gas volume during the transportation of a multiphase flow mixture, eliminating the equipment for separating oil and gas, and lowering the costs for the transportation and measurement of the crude oil product.

Specifically, the step of obtaining the volume change of the tank with the vacuum suction cavity as a result of liquid level lowering may comprise: obtaining a first liquid level in the tank with the vacuum suction cavity before a liquid level change and a second liquid level after the liquid level change; calculating the volume change as a result of liquid level lowering based on the first liquid level and the second liquid level.

Specifically, the first liquid level and the second liquid level may be obtained by measurement through liquid level meters. As an example, when the first tank 10 and the second tank 20 are cylindrical containers, the volume change V as a result of liquid level lowering may be calculated by the following formula:

$$V = S * (h1 - h2)$$

wherein, S is the cross-sectional area of the cylinder, h1 is the first liquid level, and h2 is the second liquid level. Understandably, when the first tank 10 and the second tank 20 are containers of other regular shapes, it can also be calculated by the corresponding formulas; when the first tank 10 and the second tank 20 are containers of other irregular shapes, it can be obtained by reading data stored in a memory, wherein the data may be key-value pair data composed of a liquid level and a liquid volume of a tank, i.e., a liquid level corresponding to a liquid volume of a tank.

Specifically, the step of obtaining the volume of liquid transported by the reversing mechanism 30 may comprise: obtaining the flow rate of the connecting pipeline 31 connecting the first tank 10 and the second tank 20, and obtaining the time during which the reversing mechanism 30 transports liquid; calculating the volume of liquid transported by the reversing mechanism 30 in the single cycle by the flow formula based on the flow rate and the time. For example, the volume of liquid V2 may be calculated by the following formula:

$$V2 = Q * T$$

wherein, Q is the flow rate at which the reversing mechanism 30 transports liquid, and T is the time of transportation. Understandably, when the flow rate of the reversing mechanism 30 has relatively large fluctuations, the volume may be calculated by calculus or other mathematical formulas based on the flow rate and the transportation time.

In some embodiments of the present application, after the volume of liquid corresponding to a single cycle is calculated, the volume of gas corresponding to the single cycle may also be calculated. Specifically, the measurement method for multiphase flow mixed transportation may further comprise:

Step S150, obtaining a first pressure after liquid level lowering in the tank with the vacuum suction cavity and the standard pressure;

Generally, since the volume change as a result of liquid level lowering is occupied by the gas in the multiphase mixture sucked, the volume change as a result of liquid level lowering may be taken as the volume of the gas sucked in the single cycle process. However, since the pressure in the tank with the vacuum suction cavity decreases after the liquid level of the tank drops, the first pressure of the tank with the vacuum suction cavity after the liquid level drops and the standard pressure can be obtained, to convert the gas volume corresponding to the volume change as a result of liquid level lowering into the volume under the standard pressure, wherein the standard pressure refers to the pressure usually used to measure gas volumes, for example, the standard pressure being the standard atmospheric pressure. Specifically, the first pressure of the tank with the vacuum suction cavity after liquid level lowering may be obtained by measurement through a pressure gauge provided at the first tank 10 or the second tank 20.

Step S160, calculating the volume of gas in the single cycle by the ideal gas equation of state based on the volume change as a result of liquid level lowering, the first pressure and the standard pressure.

After the first pressure of the tank with the vacuum suction cavity after liquid level lowering and the standard pressure are obtained, the volume of gas in the single cycle may be calculated by the ideal gas equation of state based on the volume change as a result of liquid level lowering, the first pressure and the standard pressure. For example, the volume of gas Q1 may be calculated by the following formula:

$$Q1 = V1 * P1/P2$$

wherein, P1 is the first pressure, and P2 is the standard pressure.

Understandably, the volume of gas is calculated above mainly in consideration of the pressure change. In practice, the volume of gas may also be calculated based on the pressure and temperature changes in the tank. As an example, if only the temperature change is considered, the volume of gas Q1 may be calculated by the following formula:

$$Q1 = V1 * T2/T1$$

wherein, T1 is the temperature in the tank with the vacuum suction cavity after liquid level lowering, and P2 is the standard temperature. Exemplarily, the standard temperature may be the temperature under the standard conditions, for example, 20°C.

As another example, if both the pressure and temperature changes are considered, the volume of gas Q1 may be calculated by the following formula:

$$Q1 = (V1 * P1 * T2)/(P2 * T1)$$

wherein, P1 is the first pressure, P2 is the standard pressure, T1 is the temperature in the tank with the vacuum suction cavity after liquid level lowering, and P2 is the standard temperature.

As another example, the gas not expelled in the previous single cycle may also be considered to calculate the volume of gas. For example, the volume of gas Q1 may be calculated by the following formula:

$$Q1 = V1 * P1/P2$$

wherein, P1 the first pressure in the tank with the vacuum suction cavity after liquid level lowering, P is the pressure in the tank with the vacuum suction cavity before liquid level lowering, V is the volume of gas in the tank with the vacuum suction cavity after liquid level lowering, V' is the volume of gas in the tank with the vacuum suction cavity before liquid level lowering, and P2 is the standard pressure. Understandably, in addition to the gas not expelled in the previous single cycle, the temperature change can also be considered. Regarding the temperature change, other embodiments of the present application may be referred to, which will not be repeated here.

In some embodiments of the present application, to calculate the volume of liquid in all the single cycles or that in a plurality of single cycles executed continuously, the measurement method for multiphase flow mixed transportation may further comprise the following step:

> calculating the cumulative volume of liquid transported by summing the volumes of liquid sucked in all the single cycles that have been executed; or obtaining the volume of liquid transported, and calculating the cumulative volume of liquid transported by summing the volume of liquid transported and the volume of liquid sucked in the single cycle.

Understandably, for the calculation of the cumulative volume of liquid transported, in addition to summing the volumes of liquid in all the single cycles, the corresponding cumulative volume of liquid transported at the end of each single cycle may also be saved as the volume of liquid transported and then used during the calculation of the cumulative volume of liquid transported in the next single cycle.

Corresponding to the calculation of the cumulative volume of liquid transported, in some embodiments of the present application, the measurement method for multiphase flow mixed transportation may further comprise the following step:

> calculating the cumulative volume of gas transported by summing the volumes of gas sucked in all the single cycles that have been executed; or obtaining the volume of gas transported, and calculating the cumulative volume of gas transported by summing the volume of gas transported and the volume of gas sucked in the single cycle.

Understandably, for the calculation of the cumulative volume of gas transported, in addition to summing the volumes of gas in each of single cycles, the corresponding volume of gas transported at the end of each single cycle may also be saved as the volume of gas transported and then used during the calculation of the cumulative volume of gas transported in the next single cycle.

Please continue to refer to Figure 2. Figure 2 is a schematic structural diagram of the device for multiphase flow mixed transportation provided in the embodiments of the present application, wherein the device for multiphase flow mixed transportation comprises:

> a first tank 10, a second tank 20;
> a reversing mechanism 30, connected to the first tank 10 and the second tank 20, and used to drive the liquid in the first tank 10 and the second tank 20 to circulate, so that the first tank 10 and the second tank 20 alternately form a vacuum suction cavity and/or a compression discharging cavity, for continuous transportation of liquid, gas or a gas-liquid mixture;
> a measuring mechanism 40, comprising a first liquid level meter 41, a second liquid level meter 42 and a flowmeter 43, the first liquid level meter 41 being provided at the first tank 10, the second liquid level meter 42 being provided at the second tank 20, and the flowmeter 43 being provided at the reversing mechanism 30 and used to measure the flow rate of the liquid driven by the reversing mechanism 30 to circulate between the first tank 10 and the second tank 20.

Specifically, the first tank 10 and the second tank 20 refer to containers for storing a multiphase fluid, wherein the multiphase fluid may refer to a mixture containing oil, natural gas, water, etc. The main purpose of the first tank 10 and the second tank 20 is that, when the liquid in the first tank 10 and the second tank 20 circulates, the first tank 10 and the second tank 20 alternately form a vacuum suction cavity and/or a compression discharging cavity, the tank forming the vacuum suction cavity sucks the multiphase fluid by negative pressure, and the tank forming the compression discharging cavity discharges gas by high pressure and then discharges liquid as the liquid level rises, ultimately realizing the continuous extraction and transportation of liquid, gas or a gas-liquid mixture. Exemplarily, when the first tank 10 transports liquid to the second tank 20, the first tank 10 will suck the multiphase fluid by negative pressure due to a decrease in the pressure as liquid level lowers and the gas expands, the second tank 20 will expel the gas by a high pressure due to an increase in the pressure as the liquid level rises and the gas is compressed, and the gas is discharged through high pressure, and at the same time, the liquid in the second tank 20 overflows and is discharged as the liquid level rises.

The reversing mechanism 30 is mainly used to drive the liquid in the first tank 10 and the second tank 20 to circulate it, so that the first tank 10 and the second tank 20 alternately form a vacuum suction cavity and/or a compression discharging cavity, the vacuum suction cavity sucks the multiphase fluid, and that the compression discharging cavity discharges the gas and liquid. Specifically, the reversing mechanism 30 may comprise a mechanical pump 32 and a connecting pipeline 31, wherein the mechanical pump 32 acts as the power source for driving the liquid in the first tank 10 and the second tank 20 to circulate it, and the connecting pipeline 31 acts as the passage for the liquid in the first tank 10 and the second tank 20 to circulate. Generally, the connecting pipeline 31 may be connected to the bottom of the first tank 10 and the second tank 20, to make it easier for the mechanical pump 32 to pump the liquid at the bottom of the first tank 10 and the second tank 20. Understandably, the connecting pipeline 31 may also be connected to other positions of the first tank 10 and the second tank 20.

The measuring mechanism 40 is used to feedback information such as the liquid level and the flow rate from measuring devices for the multiphase mixture fluid, so as to perform calculations for the multiphase fluid based on the information of the liquid level and flow volume. The measuring mechanism 40 comprises a first liquid level meter 41, a second liquid level meter 42 and a flowmeter 43, wherein the first liquid level meter 41 is provided at the first tank 10, the second liquid level meter 42 is provided at the second tank 20, and the first liquid level meter 41 and the second liquid level meter 42 are used to detect the liquid levels of the first tank 10 and the second tank 20, so that the volume change of the tank that discharges liquid can be obtained after the reversing mechanism 30 reverses the flow direction of the liquid. Due to the decrease in pressure as the liquid level lowers in the tank that discharges liquid, the multiphase fluid is sucked into the tank that discharges liquid. After the multiphase fluid is sucked, the liquid flows into the lower part of the tank, the gas is in the upper part of the tank, and the volume change as a result of liquid level lowering is by the gas in the multiphase fluid. Therefore, the volume of gas during the transportation of the multiphase fluid can be obtained by taking the volume change as a result of liquid level lowering as the volume of gas.

The flowmeter 43 is provided at the reversing mechanism 30 and used to measure the flow rate of the liquid driven by the reversing mechanism 30 to circulate between the first tank 10 and the second tank 20, so as to obtain the volume of liquid transported by the reversing mechanism 30. Generally, as shown in Figures 2 to 5, the flowmeter 43 is positioned adjacent to the mechanical pump 32 in the reversing mechanism 30, so as to measure the flow rate of the liquid transported by the mechanical pump 32. Since the volume of liquid transported by the reversing mechanism 30 is equal to the sum of the volume of liquid in the multiphase mixture sucked and the volume change as a result of liquid level lowering, when the volume change as a result of liquid level lowering is obtained, the difference between the volume change as a result of liquid level lowering and the volume of liquid transported by the reversing mechanism 30 can be used as the volume of liquid. The two are calculated separately to ultimately obtain the volume of gas and the volume of liquid in the multiphase fluid.

In the present application, the reversing mechanism 30 is controlled in each single cycle, so that the liquid level in either the first tank 10 or the second tank 20 lowers to form a vacuum suction cavity, while that in the other tank rises to form a compression discharging cavity, wherein the tank with the vacuum suction cavity sucks in the multiphase mixture, and the volume of the liquid in each single cycle is calculated by use of the fact that the volume of liquid transported by the reversing mechanism 30 is equal to the sum of the volume change as a result of liquid level lowering and the volume of liquid in the multiphase mixture sucked, thereby measuring the liquid volume and the gas volume during the transportation of a multiphase flow mixture, eliminating the equipment for separating oil and gas, and lowering the costs for the transportation and measurement of the crude oil product.

In some embodiments, a material inlet and a material outlet are provided in the upper part of the first tank 10 and the second tank 20, so that the fluid of a multiphase flow mixture is sucked in from the material inlet and discharged from the material outlet. Understandably, the material inlet and the material outlet may also be provided at other positions. In some embodiments, the first tank 10 and the second tank 20 may be polyethylene storage tanks, polypropylene storage tanks, fiberglass storage tanks, ceramic storage tanks, rubber storage tanks, stainless steel storage tanks, etc. In some embodiments of the present application, to facilitate the emptying of the contents in the first tank 10 and the second tank 20, a drain valve may be provided at the bottom of the first tank 10 and the second tank 20. During maintenance of the first tank 10, the drain valve can be opened to empty the contents in the first tank 10. It should be noted that the first tank 10 may also be other containers capable of storing multiphase fluids, for example, a box, etc.

In some embodiments of the present application, as shown in Figure 2, the mechanical pump 32 may be a single pumping device, and the connecting pipeline 31 for the circulation of liquid in the first tank 10 and the second tank 20 may also be a single pipeline. The single pipeline is connected to the first tank 10 and the second tank 20, and the single mechanical pump 32 is provided on the single pipeline. When the mechanical pump 32 rotates forward, the liquid in the first tank 10 is pumped to the second tank 20, and when the mechanical pump 32 rotates reversely, the liquid in the second tank 20 is pumped to the first tank 10, i.e., the direction of the liquid flowing between the first tank 10 and the second tank 20 is controlled by controlling the mechanical pump 32 to rotate forward or reversely.

In some embodiments of the present application, as shown in Figure 3, which is a schematic diagram of the reversing mechanism 30 provided by the embodiments of the present application, wherein the mechanical pump 32 may also be two pumping devices, and the connecting pipeline 31 through which the liquid of the first tank 10 and the second tank 20 circulates may also be two pipelines comprising a forward flow pipeline group 314 and a reverse flow pipeline group 315. The forward flow pipeline group 314 and the reverse flow pipeline group 315 are independently connected to both the first tank 10 and the second tank 20, and the two mechanical pumps 32 are respectively provided on the two pipelines, wherein one of the mechanical pumps 32 pumps the liquid in the first tank 10 to the second tank 20, while the other of the mechanical pumps 32 pumps the liquid in the second tank 20 to the first tank 10. Further, to prevent simultaneous connection of the pipelines where the two mechanical pumps 32 are located, valves may be provided on the two pipelines. For example, a first valve 316 and a second valve 317 are provided at the connections between the forward flow pipeline group 314 on the one hand and the first tank 10 and the second tank 20 on the other hand, and a third valve 318 and a fourth valve 319 are provided at the connections between the forward flow pipeline group 314 on the one hand and the first tank 10 and the second tank 20 on the other hand, to control the connection and disconnection of the two pipelines. That is, when one of the mechanical pumps 32 is pumping liquid, the pipeline where the other of the mechanical pumps 32 is located is disconnected, to prevent the pumped liquid from flowing back through the other pipeline.

In some embodiments of the present application, the connecting pipeline through which the liquid of the first tank 10 and the second tank 20 circulates may also be a plurality of pipelines. As shown in Figure 4, which is another schematic diagram of the reversing mechanism 30 provided by the embodiments of the present application, wherein the connecting pipeline 31 through which the liquid of the first tank 10 and the second tank 20 circulates comprises a first sub-pipeline 311, a second sub-pipeline 312 and a third sub-pipeline 313, the first sub-pipeline 311 and the second sub-pipeline 312 are both connected to the first tank 10 and the second tank 20, valves are provided at the four connections between the first sub-pipeline 311 and the second sub-pipeline 312 on the one hand and the first tank 10 and the second tank 20 on the other hand, one end of the third sub-pipeline 313 is connected to the first sub-pipeline 311, the other end is connected to the second sub-pipeline 312, and the mechanical pump 32 is provided on the third sub-pipeline 313. When it is necessary to transport liquid from the first tank 10 to the second tank 20, the valve at the connection between the first sub-pipeline 311 and the first tank 10 is opened, the valve at the connection between the second sub-pipeline 312 and the second tank 20 is opened, the other two valves are closed, and the mechanical pump 32 runs to transport liquid from the first tank 10 to the second tank 20; when it is necessary to transport liquid from the second tank 20 to the first tank 10, the valve at the connection between the second sub-pipeline 312 and the first tank 10 is opened, the valve at the connection between the first sub-pipeline 311 and the second tank 20 is opened, the other two valves are closed, and the mechanical pump 32 runs to transport liquid from the first tank 10 to the second tank 20. During the above process where liquid is transported from the first tank 10 to the second tank 20 or from the second tank 20 to the first tank 10, the mechanical pump 32 always transports liquid in a single direction, i.e., there is no need to reverse the rotation of the mechanical pump 32. The flow direction of liquid is controlled by controlling the opening and closing of the valves on the first sub-pipeline 311 and the second sub-pipeline 312, which prevents damage to the mechanical pump 32 due to switching between forward rotation and reverse rotation.

In some embodiments of the present application, as shown in Figure 5, which is another schematic diagram of the reversing mechanism 30 in the embodiments of the present application, the reversing mechanism 30 may further comprise a three-position four-way valve, and the mechanical pump 32 and the pipelines are connected through the three-position four-way valve, i.e., the first tank 10 and the second tank 20 are connected to the P port and the T port of the three-position four-way valve through pipelines, and the outlet and inlet of the mechanical pump 32 are connected through the A port and the B port. When the first intermediate tank is required to transport liquid to the second intermediate tank, the core of the three-position four-way valve is in the right position, i.e., the P port is connected to the B port, and the A port is connected to the T port, and the mechanical pump 32 pumps liquid in the first intermediate tank and sends it to the second intermediate tank through the A port, the T port, the P port and the B port. On the other hand, when the second intermediate tank is required to transport liquid to the first intermediate tank, the core of the three-position four-way valve is in the left position, i.e., the P port is connected to the A port, and the B port is connected to the T port, and the mechanical pump 32 pumps liquid in the second intermediate tank and sends it to the first intermediate tank through the B port, the T port, the P port and the A port. In the above process, the connection of the P port, the T port, the A port and the B port is controlled by controlling the position of the core in the three-position four-way valve, thus controlling the direction of the liquid flowing between the first tank 10 and the second tank 20 without the need of reversing the rotation of the mechanical pump 32, while reducing the number of valves.

In some embodiments of the present application, the flowmeter 43 in the measuring mechanism 40 may be a differential pressure flowmeter 43, a rotameter 43, a throttling flowmeter 43, a slit flowmeter 43, a volumetric flowmeter 43, an electromagnetic flowmeter 43, an ultrasonic flowmeter 43, etc.; the liquid level meters in the measuring mechanism 40 may be vibrating tuning fork liquid level meters, magnetic float liquid level meters, pressure liquid level meters, ultrasonic liquid level meters, sonar liquid level meters, magnetic flap liquid level meters, radar liquid level meters, etc.

To facilitate the suction of the multiphase fluid, in some embodiments of the present application, the device for multiphase flow mixed transportation may further comprise an input mechanism 50, wherein the input mechanism 50 comprises a first pipeline 51 and a first control valve 52, the first pipeline 51 is connected to first tank 10 and the second tank 20, the first control valve 52 is used to control the conduction or disconnection between the first pipeline 51 on the one hand and the first tank 10 and the second tank 20 on the other hand. When the reversing mechanism 30 drives the liquid in the first tank 10 and the second tank 20 to circulate so that the first tank 10 and the second tank 20 alternately form a vacuum suction cavity and/or a compression discharging cavity, the first control valve 52 may be used to disconnect the first pipeline 51 from the tank with the compression discharging cavity, to prevent gas or liquid in the tank with the compression discharging cavity from entering the first pipeline 51, and the first control valve 52 connects the first pipeline 51 to the tank with the vacuum suction cavity, so that the tank with the vacuum suction cavity can suck the multiphase mixture fluid in the first pipeline 51.

Exemplarily, when the reversing mechanism 30 extracts liquid from the first tank 10 and sends it into the second tank 20 so that the first tank 10 forms a vacuum suction cavity and the second tank 20 forms a compression discharging cavity, the first control valve 52 controls the connection between the first pipeline 51 and the first tank 10, and closes the passage between the second tank 20 and the first pipeline 51, so that the first tank 10 will extract the multiphase fluid; on the other hand, when the first tank 10 forms a compression discharging cavity and the second tank 20 forms a vacuum suction cavity, the first control valve 52 controls the connection between the first pipeline 51 and the second tank 20, and closes the passage between the first tank 10 and the first pipeline 51, so that the second tank 20 will extract the multiphase fluid. Specifically, the first control valve 52 may be a single three-way valve, or two two-way valves respectively provided at the connections between the first pipeline 51 on the one hand and the first tank 10 and the second tank 20 on the other hand. Understandably, the input mechanism 50 may also comprise two pipelines respectively connected to the first tank 10 and the second tank 20, and corresponding valves are provided on the two pipelines, to control the connection between the two pipelines on the one hand and the first tank 10 and the second tank 20 on the other hand, i.e., the first tank 10 and the second tank 20 suck the multiphase mixture fluid through the two pipelines respectively.

To facilitate the discharge of the multiphase fluid, in some embodiments of the present application, the device for multiphase flow mixed transportation may further comprise an output mechanism 60, wherein the output mechanism 60 comprises a second pipeline 61 and a second control valve 62, the second pipeline 61 is connected to first tank 10 and the second tank 20, the second control valve 62 is used to control the conduction or disconnection between the second pipeline 61 on the one hand and the first tank 10 and the second tank 20 on the other hand. When the reversing mechanism 30 drives the liquid in the first tank 10 and the second tank 20 to circulate so that the first tank 10 and the second tank 20 alternately form a vacuum suction cavity and/or a compression discharging cavity, the second control valve 62 may be used to disconnect the second pipeline 61 from the tank with the compression discharging cavity, to prevent the tank with the compression discharging cavity from successively discharging gas and liquid into the second pipeline 61, and the second control valve 62 disconnects the second pipeline 61 from the tank with the vacuum suction cavity, to prevent the tank with the vacuum suction cavity from sucking the multiphase mixture fluid discharged from the second pipeline 61.

Exemplarily, when the reversing mechanism 30 extracts liquid from the first tank 10 and sends it into the second tank 20 so that the first tank 10 forms a vacuum suction cavity and the second tank 20 forms a compression discharging cavity, the second control valve 62 controls the disconnection between the second pipeline 61 and the first tank 10, and opens the passage between the second tank 20 and the second pipeline 61, so that the second tank 20 will discharge the multiphase fluid; on the other hand, when the reversing mechanism 30 extracts liquid from the second tank 20 and sends it into the first tank 10 so that the first tank 10 forms a compression discharging cavity and the second tank 20 forms a vacuum suction cavity, the second control valve 62 controls the disconnection between the second pipeline 61 and the second tank 20, and opens the passage between the first tank 10 and the second pipeline 61, so that the first tank 10 will discharge the multiphase fluid. Specifically, the second control valve 62 may be a single three-way valve, or two two-way valves respectively provided at the connections between the second pipeline 61 on the one hand and the first tank 10 and the second tank 20 on the other hand. Understandably, the output mechanism 50 may also be two pipelines respectively connected to the first tank 10 and the second tank 20, and corresponding valves are provided on the two pipelines, to control the connection between the two pipelines on the one hand and the first tank 10 and the second tank 20 on the other hand, i.e., the first tank 10 and the second tank 20 suck the multiphase mixture fluid through the two pipelines respectively.

To better implement the measurement method for multiphase flow mixed transportation in the embodiments of the present application, a multiphase flow transportation system is also provided on the device for multiphase flow mixed transportation in the embodiments of the present application. The multiphase flow transportation system comprises a controller, a bus and the device for multiphase flow mixed transportation as described in any of the embodiments above, wherein:

The controller is the control center of the multiphase flow transportation system, uses various interfaces and lines to connect various parts of the entire system, and performs various functions of the device by running or executing stored programs, thereby controlling the system as a whole and implementing the steps of the measurement method for multiphase flow mixed transportation, Optionally, the controller may comprise one or more processing cores; the controller may be a central processing unit (CPU), or a general-purpose controller of another type, a digital signal processor (DSP), an application specific integrated circuit (ASIC), a field-programmable gate array (FPGA) or another programmable logic device, a discrete gate or a transistor logic device, a discrete hardware component, a programmable logic controller (PLC), etc.

The bus is the communication network of the multiphase flow transportation system that allows communication between parts of the system to facilitate the transfer of information and/or data. Optionally, the industrial communication network may comprise wired communication, for example, a fieldbus, an industrial Ethernet, time-sensitive networking (TSN), etc., and may further comprise wireless communication, for example, a narrowband Internet of Things (NB-loT), etc.

The device for multiphase flow transportation is a device that performs separation and transportation of a multiphase flow. Specifically, the device for multiphase flow transportation is connected to the controller through the bus. For example, a control valve may be connected to the controller through the bus, the mechanical pump 32 may be connected to the controller through the bus, liquid level meters, thermometers, pressure gauge, etc. may all be connected to the controller through the bus.

It is worth noting that the description of the multiphase flow transportation system above is only intended to clearly illustrate a verified process of the present application, and those skilled in the art may make equivalent modifications to the above system under the guidance of the present application. For example, the multiphase flow transportation system may further comprise a display to show the parameters (for example, pressures and temperatures) in the device for multiphase flow transportation.

In the above embodiment, the description of each embodiment is focused on certain aspects. For a part in a certain embodiment that is not described in detail, the detailed description in other previous embodiments may be referred to, and will not be repeated here.

The basic concept has been described above. Obviously, for those skilled in the art, the detailed disclosure above is only an example, and does not constitute a limitation on the present application. Although not explicitly stated herein, those skilled in the art may make various modifications, improvements and amendments to the present application. Such modifications, improvements and amendments are recommended in the present application, and therefore such modifications, improvements and amendments still fall within the spirit and scope of the exemplary embodiments of the present application.

At the same time, specific words are used herein to describe the embodiments of the present application. For example, "one embodiment", "an embodiment", and/or "some embodiments" mean a certain feature, structure or characteristic related to at least one embodiment of the present application. Therefore, it should be emphasized and noted that two or more references to "an embodiment" or "one embodiment" or "an alternative embodiment" in different places in this specification do not necessarily refer to the same embodiment. In addition, certain features, structures or characteristics in one or more embodiments of the present application may be properly combined.

It should be noted that, to simplify the expression of the disclosure of the present application and thus help the understanding of one or more embodiments of the present application, in the foregoing description of the embodiments of the present application, multiple features are sometimes combined in one embodiment or drawing orthe description thereof. However, this method of disclosure does not imply that the subject matter of the present application requires more features than are recited in the claims. In fact, the features of the embodiments are less than all the features of a single embodiment disclosed above.

The measurement method and the device for multiphase flow mixed transportation provided by the embodiments of the present application have been described in detail above. Specific examples have been used herein to describe the principle and implementation of the present application, and the description of the embodiments above is only intended to help to understand the method and the core concept of the present application; at the same time, those skilled in the art may have changes in the specific implementation and the application scope based on the idea of the present application. In view of the above, the content of this specification may not be understood as limiting the present application.

## Claims

1. A measurement method for multiphase flow mixed transportation, wherein the method comprises: providing a device for multiphase flow mixed transportation, the device for multiphase flow mixed transportation having a first tank, a second tank and a reversing mechanism that drives liquid in the first tank and the second tank to circulate; obtaining a flow direction of the liquid between the first tank and the second tank in a single cycle; controlling the reversing mechanism to run according to the flow direction, so that a liquid level in either the first tank or the second tank drops to form a vacuum suction cavity, and that a liquid level in the other tank rises to form a compression discharging cavity; the tank with the vacuum suction cavity sucks liquid and/or gas, and the tank with the compression discharging cavity discharges liquid and/or gas; obtaining a volume change of the tank with the vacuum suction cavity as a result of liquid level lowering, obtaining a volume of liquid transported by the reversing mechanism, and calculating a volume of liquid sucked by the tank with the vacuum suction cavity in the single cycle based on the volume change as a result of liquid level lowering and the volume of liquid transported by the reversing mechanism.

2. The method as claimed in claim 1, wherein the method further comprises: calculating a cumulative volume of liquid transported by summing the volumes of liquid sucked in each of single cycles that have been executed; or obtaining a volume of liquid transported, and calculating the cumulative volume of liquid transported by summing the volume of liquid transported and the volume of liquid sucked in said single cycle.

3. The method as claimed in claim 1, wherein the method further comprises: obtaining a first pressure after liquid level lowering in the tank with the vacuum suction cavity and a standard pressure; calculating a volume of gas sucked by the tank with the vacuum suction cavity in that one cycle by an ideal gas equation of state based on the volume change as a result of liquid level lowering, the first pressure and the standard pressure.

4. The method as claimed in claim 3, wherein the method further comprises: calculating a cumulative volume of gas transported by summing the volumes of gas sucked in all the cycles that have been executed; or obtaining a volume of gas transported, and calculating the cumulative volume of gas transported by summing the volume of gas transported and the volume of gas sucked in the cycle.

5. The method as claimed in claim 1, wherein the step of obtaining a volume of liquid transported by the reversing mechanism comprises: obtaining a flow rate of a connecting pipeline connecting the first tank and the second tank, and obtaining a time during which the reversing mechanism transports liquid; calculating the volume of liquid transported by the reversing mechanism in the cycle by a flow formula based on the flow rate and the time.

6. The method as claimed in claim 1, wherein the step of obtaining a flow direction of the liquid between the first tank and the second tank in one cycle comprises: detecting whether the liquid levels in the first tank and the second tank reach a preset liquid level line; deciding that the flow direction is a direction along which liquid in the second tank flows into the first tank if the liquid level in the first tank reaches the preset liquid level line; deciding that the flow direction is a direction along which liquid in the first tank flows into the second tank if the liquid level in the second tank reaches the preset liquid level line.

7. The method as claimed in claim 1, wherein the step of obtaining a volume change of the tank with the vacuum suction cavity as a result of liquid level lowering comprises: obtaining a first liquid level in the tank with the vacuum suction cavity before a liquid level change and a second liquid level after the liquid level change; calculating the volume change as a result of liquid level lowering based on the first liquid level and the second liquid level.

8. The method as claimed in any of claims 1 to 7, wherein the step of controlling the reversing mechanism to run according to the flow direction so that a liquid level in either the first tank or the second tank drops to form a vacuum suction cavity and that a liquid level in the other tank rises to form a compression discharging cavity comprises: connecting a connecting pipeline in the reversing mechanism, the connecting pipeline connecting the first tank and the second tank; controlling a mechanical pump of the reversing mechanism to run, so that liquid in the first tank and the second tank flows in the flow direction through the connecting pipeline.

9. The method as claimed in claim 8, wherein the step of connecting a connecting pipeline in the reversing mechanism comprises: connecting a forward flow pipeline group in the connecting pipeline, and disconnecting a reverse flow pipeline group in the connecting pipeline; or connecting a reverse flow pipeline group in the connecting pipeline, and disconnecting a forward flow pipeline group in the connecting pipeline.

10. The method as claimed in claim 9, wherein the step of connecting a forward flow pipeline group in the connecting pipeline and disconnecting a reverse flow pipeline group in the connecting pipeline comprises: opening a first valve and a second valve on the forward flow pipeline group, the first valve being provided at a connection between the forward flow pipeline group and the first tank, and the second valve being provided at a connection between the forward flow pipeline group and the second tank; closing a third valve and a fourth valve on the reverse flow pipeline group, the third valve being provided at a connection between the reverse flow pipeline group and the first tank, and the fourth valve being provided at a connection between the reverse flow pipeline group and the second tank.

11. The method as claimed in claim 8, wherein the step of connecting a connecting pipeline in the reversing mechanism comprises: controlling a three-position four-way valve on the connecting pipeline to be in a first valve position, connecting a P port and an A port of the three-position four-way valve, and connecting a T port and a B port of the three-position four-way valve; or controlling the three-position four-way valve on the connecting pipeline to be in a second valve position, connecting a P port and a B port of the three-position four-way valve, and connecting a T port and an A port of the three-position four-way valve.

12. A device for multiphase flow mixed transportation, wherein the device uses the measurement method for multiphase flow mixed transportation as claimed in any of claims 1 to 11, and the device comprises: a first tank; a second tank, a reversing mechanism, connected to the first tank and the second tank, and used to drive liquid in the first tank and the second tank to circulate, so that the first tank and the second tank alternately form a vacuum suction cavity and/or a compression discharging cavity, for continuous transportation of liquid, gas or a gas-liquid mixture; a measuring mechanism, comprising a first liquid level meter, a second liquid level meter and a flowmeter, the first liquid level meter being provided at the first tank, the second liquid level meter being provided at the second tank, and the flowmeter being provided at the reversing mechanism and used to measure a flow of the liquid driven by the reversing mechanism to circulate between the first tank and the second tank.

Providing a device for multiphase flow mixed transportation, the device for multiphase flow mixed transportation having a first tank, a second tank and a reversing mechanism that drives a liquid in the first tank and the second tank to circulate it ⟋ S110

Obtaining the flow direction of the liquid between the first tank and the second tank in an individual cycle ⟋ S120

Controlling the reversing mechanism to run according to the flow direction, so that the liquid level in either the first tank or the second tank drops to form a vacuum suction cavity, and that the liquid level in the other tank rises to form a compression discharging cavity ⟋ S130

Obtaining the volume change of the tank with the vacuum suction cavity as a result of liquid level lowering, obtaining the volume of liquid transported by the reversing mechanism, and calculating the volume of the liquid sucked by the tank with the vacuum suction cavity in the single cycle based on the volume change as a result of liquid level lowering and the volume of the liquid transported by the reversing mechanism ⟋ S140

Fig. 1

Fig. 2

Fig. 3

Fig. 4

Fig. 5

## INTERNATIONAL SEARCH REPORT

| | International application No. |
|---|---|
| | **PCT/CN2021/141858** |

**A.    CLASSIFICATION OF SUBJECT MATTER**

G01F 1/00(2022.01)i;  G01F 23/00(2022.01)i

According to International Patent Classification (IPC) or to both national classification and IPC

**B.    FIELDS SEARCHED**

Minimum documentation searched (classification system followed by classification symbols)

G01F

Documentation searched other than minimum documentation to the extent that such documents are included in the fields searched

Electronic data base consulted during the international search (name of data base and, where practicable, search terms used)

CNABS; CNTXT; CNKI; 万方; 超星; VEN; USTXT; EPTXT; WOTXT; IEEE: 官天日, 管辅能源科技有限公司, 多相, 三相, 混输, 换向, 循环, 泵, 真空, 液体, 体积, 容积, multi 1w phase flow, liquid, capacity, volume, commutation, inverting, reversing, circulate, loop, pump

**C.    DOCUMENTS CONSIDERED TO BE RELEVANT**

| Category* | Citation of document, with indication, where appropriate, of the relevant passages | Relevant to claim No. |
|---|---|---|
| A | CN 109114433 A (GUAN, Tianri) 01 January 2019 (2019-01-01)<br>    description, paragraphs [0008]-[0036], and figures 1 and 2 | 1-12 |
| A | CN 106704134 A (JIFUAI (TIANJIN) COMPRESSION SYSTEM TECHNOLOGY CO.,<br>LTD.) 24 May 2017 (2017-05-24)<br>    entire document | 1-12 |
| A | CN 208140194 U (TSINGHUA UNIVERSITY) 23 November 2018 (2018-11-23)<br>    entire document | 1-12 |
| A | CN 102230461 A (LIU, Qingming) 02 November 2011 (2011-11-02)<br>    entire document | 1-12 |
| A | US 2016008742 A1 (VALIN CORP) 14 January 2016 (2016-01-14)<br>    entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2022** | **10 March 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141858**

| Patent document cited in search report | | | Publication date (day/month/year) | Patent family member(s) | | | Publication date (day/month/year) |
|---|---|---|---|---|---|---|---|
| CN | 109114433 | A | 01 January 2019 | WO | 2020088012 | A1 | 07 May 2020 |
| | | | | CN | 208935838 | U | 04 June 2019 |
| CN | 106704134 | A | 24 May 2017 | None | | | |
| CN | 208140194 | U | 23 November 2018 | None | | | |
| CN | 102230461 | A | 02 November 2011 | CN | 102230461 | B | 01 January 2014 |
| US | 2016008742 | A1 | 14 January 2016 | US | 9895630 | B2 | 20 February 2018 |

Form PCT/ISA/210 (patent family annex) (January 2015)

**REFERENCES CITED IN THE DESCRIPTION**

**Patent documents cited in the description**

- CN 202011641491X